Europäisches Patentamt

(19) European Patent Office

Office européen des brevets

(11) EP 0 800 079 A1

## (12) EUROPEAN PATENT APPLICATION

(43) Date of publication:
08.10.1997 Bulletin 1997/41

(51) Int. Cl.6: G01N 27/26

(21) Application number: 96105476.4

(22) Date of filing: 04.04.1996

(84) Designated Contracting States:
BE CH DE DK ES FR GB IT LI NL SE

(71) Applicants:
• Lin, Shengfu
  Taipei (TW)
• Lin, Chih-I
  Chino Hills, CA 91709 (US)

(72) Inventors:
• Lin, Shengfu
  Taipei (TW)
• Lin, Chih-I
  Chino Hills, CA 91709 (US)

(74) Representative: Grünecker, Kinkeldey,
  Stockmair & Schwanhäusser
  Anwaltssozietät
  Maximilianstrasse 58
  80538 München (DE)

(54) Method of using a computer to collect chemical signals directly

(57) The present invention relates to a method of using a computer to collect chemical signals directly from a chemical sensor. This method first converts output signals received from the chemical sensor into digital signals by using a transforming circuit and an analog-to-digital converter in cooperation with a control computer program executed in the computer; transfers the digital signals to the computer and processes the digital signals in the computer in accordance with the type of the chemical sensor used.

Fig. 1

## Description

### Field of the Invention

The present invention is related to a method of using a computer to collect chemical signals directly.

### Background of the Invention

There are three types of chemical sensors: chemical sensors used in conductometry, chemical sensors used in amperometry and chemical sensors used in potentiometry. For examples: pH electrodes, ion-selective electrodes, ISFET (ion-selective field effect transistors), enzyme electrodes, biosensors, etc. are widely used in chemical, biochemical, biotechnological, environmental protection and medical analyzers, such as: pH-meter, ion analyzer, polarography, chemical analyzer, bioanalyzer, bioreactor, ion chromatography, flow-injection analyzer, etc. Moreover, Chemical sensors are used in quality control analysis, on-line analysis and monitor-control apparatus for chemical manufacturing processes. U.S. patent No. 4,897,128 discloses a method of controlling the ionic concentrations of reactants in a zinc phosphate coating sink by using pH-electrode and fluorine-ion selective electrode.

A chemical sensor can convert a specific chemical signal (i.e. concentration of a certain component of a sample) or the sum of many chemical signals into an electronic signal such as electric potential, resistance, or current. However, in order for the users to understand the physical meanings of a chemical signal, this electronic signal still needs to be further processed, stored, and/or displayed by an signal processing equipment. For example, a pH-electrode has to be incorporated with a pH meter to determine the pH value of a solution. Similar requirement applies to the usage of a chemical analyzer, and pH monitor-control equipment. A chemical sensor for amperometry can determine the reaction current in the potential static condition by relying on a potentiostat, and then indirectly obtain the concentration of a specific specie. Similar requirement applies to the usage of a chemical analyzer and a biochemical analyzer. A chemical sensor for conductometry can determine the conductivity by relying on a conductometer, and the determined conductivity can then be used to indicate the ending of a conductometric titration, or used as the standards of ionic concentrations in ion chromatography. Each kind of these signal processing equipment has its specific usage, and it cannot be exchanged to be used in another chemical sensor. For example, a pH-meter can not be a conductometer or a coulometer, and it also can not be extended to another use. without a special design, a potentiometer cannot be extended to be used in potentiostatic coulometry.

Generally speaking, conventional signal processing equipment can be divided into 4 categories. The first category includes the simple instruments which cannot be connected to a computer or a recorder. For example, pH-meters (types 704, 620, 588) of Metrohm, Switzerland, do not have very powerful functions, and do not have the ability to execute data communication with other instruments like chemical analyzers.

The second type of signal processing equipment, although cannot be connected with a computer externally, is able to communicate with an external recorder through its analog signal output node, and, therefore, enhance its function. Examples are pH-meter (PHM82) of Radiometer, Denmark, Potentio/Galvanostat and Coulomb/Amperohour Meter of Nichia, Japan. The functions of these signal processing equipment are still limited. Although an analog signal output node is available, it is still physically difficult to execute data communication with other instruments.

The Third type of signal processing equipment, although cannot be connected with a computer or a recorder externally, has its own build-in display and printer. Examples are modular biological fluid analyzer disclosed in U.S. Design patent No. D330,770, and a clinic chemistry analyzer disclosed in U.S. Design patent No. D332,314. These build-in functions clearly can not be compared with those of a computer. For example, the resolution of a computer monitor is better than a build-in display of a signal processing equipment. A computer also has a more strong function in data processing/storing and various accessories which can be mounted into the computer easily. Moreover, the analyses and data processing functions of this type of signal processing instruments cannot be extended or enhanced.

The fourth type of signal processing equipment can be connected with a computer externally in order to enhance its data processing /storing/display ability. For example, voltammetry Model 693 VA Processor from Metrohm, Switzerland; PHM 85 pH-meter from Radiometer, Denmark; Potentiostat/Galvanostat Model 273A from EG&G, U.S.A.; chemical analyzer disclosed in U.S. patent No. 4,935,875; and On-line biological inhibition/toxicity detector disclosed in U.S. patent No. 5,106,511. This type of signal processing equipment contains a central processing unit. For example, line 17, column 5 of U.S. patent No. 5,106,511 and line 45, column 6 of U.S. patent No. 4,935,875 state that these signal processing equipment use Model 6809 microprocessor (Motorola, U.S.A.), ROM, RAM, timer, display or monitor, keyboard or I/O port, Analog-to-Digital converter (ADC), etc. (For further details, please refer to Fig. 1 of U.S. patent No. 4,935,875 and its explanation.) In addition, when these signal processing equipment are to be connected externally with computers, RS-232 or GPIB card has to be used as the medium for data communication.

In order to extend the analysis and data processing functions, the inventors have focused their research on the structure of the fourth type of signal processing equipment. The result is that except some minor components such as ADC, the primary components such as CPU, ROM, RAM, timer, monitor, keyboard, I/O port, printer and disk drive, are

2

all included in a computer. However, the primary components of a computer are generally more powerful and more compatible to external accessories than the build-in components in the fourth type of signal processing equipment. Therefore, the fourth type of signal processing equipment may be replaced by a computer. In addition, ADC can be easily purchased in the market. Accordingly, it is possible to use an ADC bought from the market to directly convert the analog signals from a chemical sensor into digital signals, and transfer the digital signals to a computer where they are processed. If this can be accomplished, the signal processing equipment used at the present time can be entirely replaced by a computer with modifications. Nowadays, part of mechanic-sensors or thermal sensors are using the same idea of replacing signal processing equipment with computers and ADCs. However, this idea has not been used in chemical sensors.

Based on the above analyses, the inventors used a market purchased ADC to connect with a chemical sensor which is used in potentiometry (e.g. a pH electrode) and a computer. In other words, the output signals from a chemical sensor were received in a series as follows: "chemical sensor → ADC → computer". However, the results showed that although a large number of data were collected, the average value of these data could not represent the actual value accurately because the average values were not consistent for several runs repeated by the same procedures. The deviations were large and no pattern could be found.

After more intensive research, the inventors found out that the addition of a voltage follower could solve the existing problem. That is to say, if the connection is in a series of "chemical sensor → voltage follower → ADC → computer", the output signals of a chemical sensor which is used in potentiometry can be easily and accurately obtained.

Furthermore, current ADCs in the market often have an additional function of Digital-to-Analog Conversion (DAC) at the same time. Therefore, it is theoretically possible to use a DAC to convert the digital signals sent by a computer into analog signals, then through a chemical sensor to execute voltammetry method; or under potentiostatic condition, execute amperometry to obtain a concentration of a certain component of a sample. The actual experimental results showed that although the voltage output of the DAC was stationary, the electric potential of the working electrode was fluctuating. However, this problem can be solved by the addition of a potentiostat circuit. Similarly, a Galvanostat circuit can be used to solve the same problem in potentiometry under Galvanostatic condition.

In the conventional signal processing equipment for the chemical sensor used in conductometry, a transducer has to be added to reduce the voltage of an alternating current source for a conductance cell. However, the inventors found out that by executing a control program in the computer, the DAC can be used as an alternating current source.

## Summary of the Invention

Based on the above discoveries, the present inventors disclose a system for carrying out amperometry, potentiometry, conductometry, and voltammetry for chemical sensors of different types, which comprises a computer, an ADC/DAC, a voltage follower, a current-potential converter, a potentiostat circuit, a Galvanostat circuit and a proper computer program which can be executed in said computer. In other words, we can have the functions of a pH meter, an amperometer, a conductometer, a potentiostat/Galvanostat, and a voltammetric processor; substantially cover all the equipment which use chemical sensors or any extension uses of these equipment, e.g. conductometer used in ion-chromatography. On the contrary, the conventional signal processing equipment for chemical sensors have their own specific usage, and they cannot be exchanged. For example, a pH meter can be used only as a pH meter, not a potentiostat, and a voltammetric processor can not be a conductometer at the same time.

In addition, ADC/DAC cards in the market usually have DIO (digital input/output) function, hence they can also be used as the control of a pump or a valve. Generally, the system described above can be connected with other accessories (if necessary) to be used as a chemical analyzer, bio-chemical analyzer, clinic analyzer, pH/electric potential/conductance automatic titration meter, ion chromatography, polarography, and a quality control, on-line analysis and monitor-control equipment of a chemical manufacturing process.

The first objective of this invention is to provide a method of converting output signals of a chemical sensor into digital signals and processing said digital signals by using a computer.

The second objective of this invention is to provide a system for collecting chemical signals from a chemical sensor, which comprises a computer, an ADC, a transforming circuit and a proper computer program which can be executed in said computer.

The third objective of this invention is to provide a system for collecting chemical signals from a chemical sensor, which comprises a computer, ADC/DAC/ DIO interface cards, a transforming circuit and a proper computer program which can be executed in said computer.

## Brief Description of the Drawings

The foregoing and other objects, aspects and advantages will be better understood from the following detailed description of the preferred embodiments of the invention with reference to the accompanying drawings wherein like numerals represent like elements and in which:

Figure 1 is a block diagram which shows a system for collecting chemical signals from a chemical sensor according to a first preferred embodiment of the present invention;

Figure 2 is an algorithm of a control computer program to be executed in the computer in Fig. 1 when the chemical sensor thereof is a pH meter;

Figure 3 is a block diagram which shows a system for collecting chemical signals from a chemical sensor according to a second preferred embodiment of the present invention;

Figure 4 is a block diagram which shows a system for collecting chemical signals from a chemical sensor according to a third preferred embodiment of the present invention;

Figure 5 is a plot which shows a pH value distribution of acetic acid/sodium acetate buffer solution measured by using the system in Fig. 1 and the algorithm in Fig. 2; and

Fig. 6 is an electric circuit of an voltage follower, wherein an IC U1 is soled by Fujitsu Co., Japan under a code of OP41, FJ9201.

Detailed Description of the Invention

The present invention is related to a method of using a computer to collect chemical signals directly from a chemical sensor, in which said computer is provided with an Analog-to-Digital converter (ADC) and said chemical sensor is connected to said ADC with a transforming circuit. The present method comprises the followings steps:

converting output signals received from said chemical sensor into digital signals by using said transforming circuit and said ADC in cooperation with a control computer program executed in said computer;
transferring said digital signals from said ADC to said computer; and
processing said digital signals in said computer in accordance with the type of said chemical sensor.

When the chemical sensor used in the present method is for potentiometry, said transforming circuit is a voltage follower. In addition, said computer may be further provided with a Digital-to-Analog converter (DAC), and said DAC is connected to said chemical sensor with a Galvanostat circuit, wherein a Galvanostatic current is received by said chemical sensor from said Galvanostat circuit in cooperation with said DAC and said control computer program executed said computer so that a potentiometry under Galvanostatic condition is carried out.

When the chemical sensor used in the present invention is for amperometry, said transforming circuit is a current-potential converter. In addition, said computer may be further provided with a Digital-to-Analog converter (DAC), and said DAC is connected to said chemical sensor with a potentiostat circuit, wherein a current having a desired electric potential wave form or a potentiostatic current is received by said chemical sensor from said potentiostat circuit in cooperation with said DAC and said control computer program executed said computer so that a voltammetry or an amperometry under potentiostatic condition are carried out.

When the chemical sensor used in the present invention is for conductometry, said transforming circuit is a current-potential converter, and said computer is further provided with a Digital-to-Analog converter (DAC) which is connected to said chemical sensor, wherein an alternating current is received by said chemical sensor from said DAC in cooperation with said control computer program executed said computer so that a conductometry is carried out.

Said chemical sensor can also a sensor array. In Chapter 6 entitled "Multi-Component analysis in Chemical Sensing", Vol. 2 entitled "Chemical and Biochemical Sensors", of Sensors (edited by W. Gopel, I. Hesse and J. N. Zemel, and published by VCH company, Germany), a signal sensor, a sensor array, and the combination of both are demonstrated. The chemical sensors described here are the general chemical sensors, including the common biosensors, biochemical sensors, enzyme electrodes, gas sensors, etc. The form of these chemical sensors can be a probe, an electrochemical sensor, a liquid electrolyte sensor, a solid state electrochemical sensor, a field effect chemical sensor, a calorimetric chemical sensor, an optochemical sensor, a piezoelectrically chemical sensor, etc. These sensors are described in Chapters 1, 5, 7, 8, 9, 10, 11, 12, 13, 14 and 16, Vols. 2 and 3 of Sensors (edited by W. Gopel, I. Hesse and J. N. Zemel, and published by VCH company, Germany), which can convert chemical signals into electronic signals.

The voltage follower described above is a known circuit. Please refer to Microelectronics, Jacob Millman and Arvin Garbel, second edition, p. 445. This voltage follower is used in this invention to convert the high impedance electronic signals of the chemical sensors described above to medium or low impedance signals. Generally, the output electronic signals of a chemical sensor are high impedance electronic signals of about $10^5$ - $10^6$ Ohms. If these signals are connected with an ADC directly, the ADC cannot convert the analog signals into digital signals accurately. However, if a voltage follower is inserted between a chemical sensor and an ADC, the problem will be solved.

Said Galvanostat circuit is a known circuit and is described in Principles of Instrumental Analysis, Dougls A. Skoog, third edition, p. 49.

Said current-potential converter is a known circuit. Please refer to Microelectronics, Jacob Millman and Arvin Garbel, second edition, pp. 449-450. This current-potential converter can convert the electric current signals of a chemical sensor used in amperometry into voltage signals, in order for the ADC to convert this analog voltage signals into digital signals.

Said potentiostat circuit a known circuit. Please refer to <u>Principles of Instrumental Analysis</u>, Douglas A. Skoog, p. 49. This potentiostat circuit can equalize the electric potential output of a DAC and the voltage of the working electrode of the chemical sensor. In other words, the voltage of the working electrode is constant. If DAC is connected to a chemical sensor, the voltage output of the DAC, V, and the voltage of the working electrode of the chemical sensor, $V_1$, has the following relationship:

$$V = V_1 + V_2 + IR + V_3 + V_4$$

$V_1$ stands for the voltage of the counter electrode, IR stands for the IR drop caused by current - resistance, $V_3$ and $V_4$ are the overvoltage of the working electrode and counter electrode, respectively. Because $V_3$, $V_4$ are related to the complex kinetic polarization and concentration polarization, the voltage of the working electrode is not stable even though the DAC output voltage (V) is constant. During an electro-chemical analysis, it is required that the voltage of the working electrode remains constant. Therefore, a potentiostat circuit has to be inserted between the DAC and the chemical sensor to solve the problem.

Each of these voltage follower, current - potential converter, potentiostat circuit and/or Galvanostat circuit described above is a simple circuit. When necessary, they can be combined to be in one circuit board, or even made into a computer serial port card, or be included in an ADC interface card. The ADC described above is a known circuit. Some ADC interface cards on the market, in addition to ADC, have DAC and DIO functions in one interface card. For example, the PCL-718, PCL-818, PCL-812, PCL-812PG interface cards manufactured by Advantech Co. Ltd., Taiwan all have 16 channels ADC, 16 DI (digital inputs), 16 DO (digital outputs) and 1-2 channels DAC. In each of these ADC interface cards described above, its DAC and/or DIO channels can also be formed in a separate interface card. Moreover, remote sensor-to-computer interface modules such as ADAM 4000 series manufactured by Advantech Co. Ltd., Taiwan may be used as the ADC of the present invention so that said output signals of said chemical sensor can be collected by a remote computer.

The computer describe above can be a desktop computer (a PC or a minicomputer), or a portable computer (notebook or laptop computer), preferably a desktop PC or a notebook computer.

Said control computer program can be stored as a firm-ware or a soft-ware which can be read and executed by the computer, preferably as a soft-ware due to its flexibility of editing and change.

A system for collecting chemical signals disclosed by the present invention comprises:

a computer for executing a control computer program;

one or more chemical sensors for providing output signals;

one or more transforming circuits for transforming said output signals received from said one or more chemical sensors into desired electronic signals, one end of said one or more transforming circuits being connected with said one or more chemical sensors;

one or more Analog-to-Digital Converter (ADC) interface cards for converting said desired electronic signals into digital signals and transferring said digital signal to said computer, which connects the other end of said one or more transforming circuit with the computer;

in which said one or more transforming circuits are a voltage follower provided that said one or more chemical sensors are the chemical sensor used in potentiometry; or

said one or more transforming circuits are a current-potential converter provided that said one or more chemical sensors are the chemical sensor used in amperometry or conductometry,

whereby said output signals from said chemical sensor are converted into digital signals by using said transforming circuit and said ADC in cooperation with said control computer program executed in said computer, and said digital signals are processed in said computer in accordance with the type of said chemical sensor.

When said one or more chemical sensors are the chemical sensor used in potentiometry, said computer is further provided with a Digital-to-Analog converter (DAC), and said DAC is connected to said one or more chemical sensors with a Galvanostat circuit so that a Galvanostatic current can be received by said one or more chemical sensors from said Galvanostat circuit in cooperation with said DAC and said control computer program executed in said computer, and thus a potentiometry under Galvanostatic condition can be carried out.

When said one or more chemical sensors are the chemical sensor used in amperometry, said computer is further provided with a Digital-to-Analog converter (DAC), and said DAC is connected to said one or more chemical sensors with a potentiostat circuit so that a current having a desired electric potential wave form or a potentiostatic current can be received by said one or more chemical sensors from said potentiostat circuit in cooperation with said DAC and said control computer program executed in said computer, and thus a voltammetry or an amperometry under potentiostatic condition can be carried out.

When said one or more chemical sensors are the chemical sensor used in conductometry, said computer is further provided with a Digital-to-Analog converter (DAC) which is connected to said one or more chemical sensors so that an alternating current can be received by said one or more chemical sensors from said DAC in cooperation with said control computer program executed in said computer, and thus a conductometry can be carried out.

The function of this system entirely depends on the control computer program executed by the computer.

Said computer, said ADC interface card, said chemical sensor, said voltage follower. said current-potential converter, said potentiostat circuit and said Galvanostat circuit contained in said system are the same as those described in the method of using a computer to collect chemical signals from a chemical sensor directly.

Said one or more ADC interface cards can be connected with the computer by inserting gold fingers provided on said one or more ADC interface cards into one or more slots provided by the computer or expanded therefrom.

Preferably, said one or more ADC interface cards further have digital-to-analog converter (DAC) and digital input/output (DIO) functions.

Generally, the system described above can be connect with other accessories (if necessary) to be used as a chemical analyzer, bio-chemical analyzer, clinic analyzer, pH/electric potential/conductance automatic titration meter, ion chromatography, polarography, and a quality control, on-line analysis and monitor-control equipment of a chemical manufacturing process.

To further explain this invention, several preferred embodiments will be described in the following text by referring to the figures accompanied.

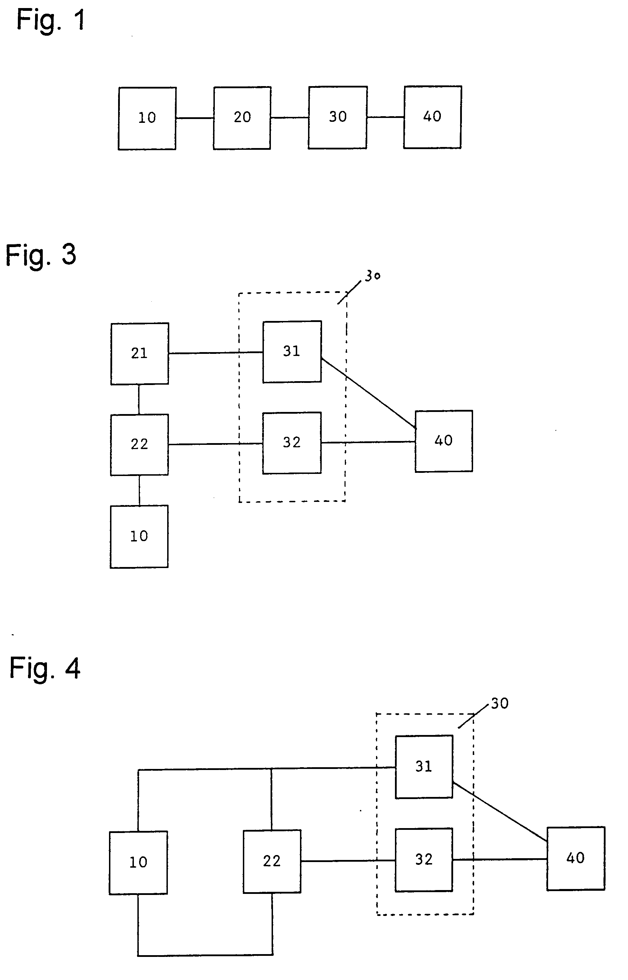

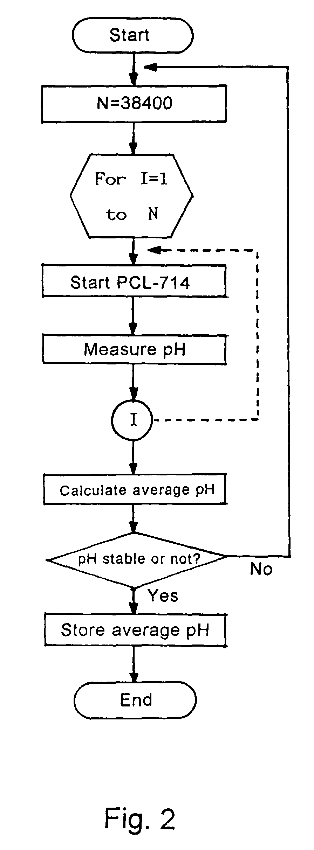

Figure 1 is a block diagram which shows a system for collecting chemical signals from a chemical sensor according to a first preferred embodiment of the present invention, wherein the chemical sensor 10 are connected to an ADC 30 with a voltage follower 20, and said ADC 30 is connected to a computer 40.

Figure 2 is an algorithm of a control computer program to be executed in the computer in Fig. 1 when the chemical sensor thereof is a pH meter, in which the ADC/DAC is manufactured by Advantech Co. Ltd., Taiwan (model PCL-714). The experiment data collected are shown in the following Example 1.

Figure 3 is a block diagram which shows a system for collecting chemical signals from a chemical sensor according to a second preferred embodiment of the present invention, in which 10 stands for the chemical sensor used in amperometry, 21 stands for a potentiostat circuit, 22 stands for a current-potential converter, 30 stands for an interface card, 31 stands for DAC in the interface card, 32 stands for ADC in the interface card, and 40 stands for a computer. DAC 31 gives a specific electric potential to the potentiostat circuit 21 to executes potentiostatic electrolysis, cyclic voltammetry or square wave voltammetry. The current formed in the chemical sensor 10 is converted into voltage signals by current-potential converter 22, and the voltage signals are converted to digital signals by ADC 32, which are then processed by the computer 40. This system can be used in amperometry under potentiostatic condition or voltammetry like polarography.

Figure 4 is a block diagram which shows a system for collecting chemical signals from a chemical sensor according to a third preferred embodiment of the present invention, in which the numeral numbers of 22, 30, 31, 32 and 40 represent the same elements represented by the like numeral numbers in Fig. 3, and 10 represents a chemical sensor for conductometry. DAC 31 gives an electric potential of sine wave to the chemical sensor 10. The resultant current, through the current-potential converter 22 is converted to resistance signals, which are then measured by ADC 32. This system can be used in conductometry.

Example 1:

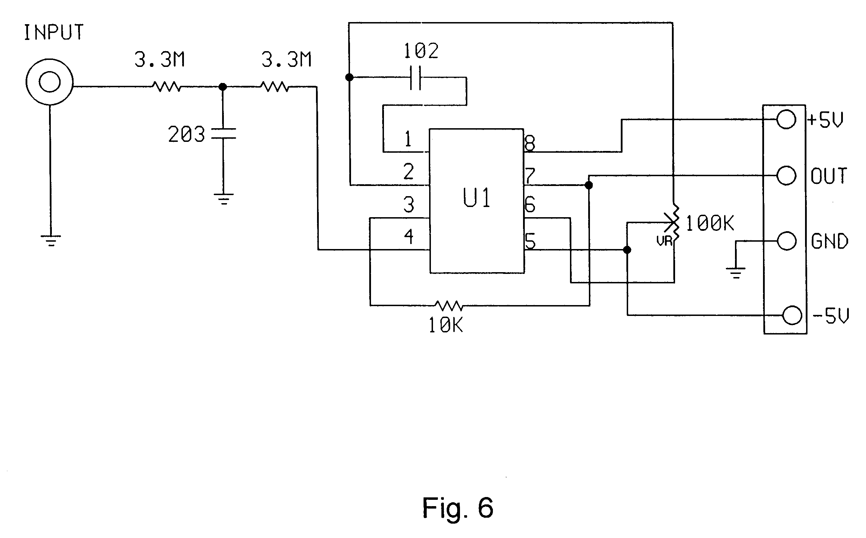

The system shown in Fig. 1 was used to measure pH value of an aqueous buffer solution prepared by mixing 1:1 (v/v) of 0.1 M acetic acid solution and 0.1 M sodium acetate solution. A pH electrode Model PHM82 purchased from Radiometer, Denmark, was used as the chemical sensor 10; a circuit shown in Fig. 6 was used as the voltage follower 20; an IBM compatible AT computer was used as the computer 40; and PCL-714 ADC/DAC interface card purchased from Advantech Co. Ltd., Taiwan was used as the ADC 30 in Fig. 1. 174 average pH values were obtained, each of which was obtained by recording about 30 thousand measurements (1-2 seconds measuring time) and calculating the average value of the about 30 thousand measurements. The results are shown as follows:

| Average pH | Appearing times | Accumulation of appearing times |
|---|---|---|
| 4.6287 | 2 | 2 |
| 4.6288 | 17 | 19 (2+7) |
| 4.6289 | 22 | 41 (19+22) |
| 4.6290 | 54 | 95 (41+54) |
| 4.6291 | 41 | 136 (95+41) |
| 4.6292 | 23 | 159 (136+23) |
| 4.6293 | 12 | 171 (159+12) |
| 4.6294 | 1 | 172 (171+1) |
| 4.6295 | 2 | 174 (172+2) |

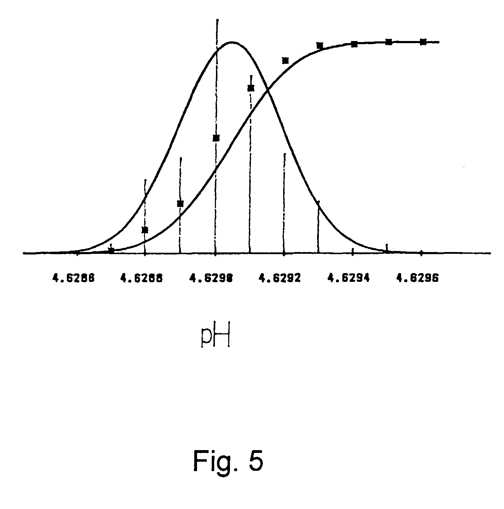

Two curves (normal distribution and accumulation distribution) were made according to the above data and shown in Fig. 5. In Fig. 5, horizontal axis stands for the average pH values. The vertical line at each average pH value represents the appearing times of said each average pH value; the * at each average pH value represents the accumulation of the appearing times of the average pH values less and equal to said each average pH value. It can be seen from Fig. 5 that the distribution of experimental data fits the theoretical distribution. The standard deviation is 0.0002.

## Claims

1. A method of using a computer to collect chemical signals directly from a chemical sensor, in which said computer is provided with an Analog-to-Digital converter (ADC) and said chemical sensor is connected to said ADC with a transforming circuit, said method comprising the followings steps:

   converting output signals received from said chemical sensor into digital signals by using said transforming circuit and said ADC in cooperation with a control computer program executed in said computer;
   transferring said digital signals from said ADC to said computer; and
   processing said digital signals in said computer in accordance with the type of said chemical sensor.

2. The method according to claim 1, in which said transforming circuit is a voltage follower provided that the chemical sensor is the chemical sensor used in potentiometry.

3. The method according to claim 2, in which said computer is further provided with a Digital-to-Analog converter (DAC), and said DAC is connected to said chemical sensor with a Galvanostat circuit, wherein a Galvanostatic current is received by said chemical sensor from said Galvanostat circuit in cooperation with said DAC and said control computer program executed said computer so that a potentiometry under Galvanostatic condition is carried out.

4. The method according to claim 1, in which said transforming circuit is a current-potential converter provided that the chemical sensor is the chemical sensor used in amperometry.

5. The method according to claim 4, in which said computer is further provided with a Digital-to-Analog converter (DAC), and said DAC is connected to said chemical sensor with a potentiostat circuit, wherein a current having a desired electric potential wave form or a potentiostatic current is received by said chemical sensor from said potentiostat circuit in cooperation with said DAC and said control computer program executed said computer so that a voltammetry or an amperometry under potentiostatic condition are carried out.

6. The method according to claim 1, in which said transforming circuit is a current-potential converter, said computer is further provided with a Digital-to-Analog converter (DAC) which is connected to said chemical sensor provided that the chemical sensor is the chemical sensor used in conductometry, wherein an alternating current is received by said chemical sensor from said DAC in cooperation with said control computer program executed said computer so that a conductometry is carried out.

7. A system for collecting chemical signals comprising:

a computer for executing a control computer program;
one or more chemical sensors for providing output signals;
one or more transforming circuits for transforming said output signals received from said one or more chemical sensors into desired electronic signals, one end of said one or more transforming circuits being connected with said one or more chemical sensors;
one or more Analog-to-Digital Converter (ADC) interface cards for converting said desired electronic signals into digital signals and transferring said digital signal to said computer, which connects the other end of said one or more transforming circuit with the computer;
in which said one or more transforming circuits are a voltage follower provided that said one or more chemical sensors are the chemical sensor used in potentiometry; or
said one or more transforming circuits are a current-potential converter provided that said one or more chemical sensors are the chemical sensor used in amperometry or conductometry,
whereby said output signals from said chemical sensor are converted into digital signals by using said transforming circuit and said ADC in cooperation with said control computer program executed in said computer, and said digital signals are processed in said computer in accordance with the type of said chemical sensor.

8. The system according to claim 7, in which said one or more chemical sensors are the chemical sensor used in potentiometry, said computer is further provided with a Digital-to-Analog converter (DAC), and said DAC is connected to said one or more chemical sensors with a Galvanostat circuit so that a Galvanostatic current can be received by said one or more chemical sensors from said Galvanostat circuit in cooperation with said DAC and said control computer program executed in said computer, and thus a potentiometry under Galvanostatic condition can be carried out.

9. The system according to claim 7, in which said one or more chemical sensors are the chemical sensor used in amperometry, said computer is further provided with a Digital-to-Analog converter (DAC), and said DAC is connected to said one or more chemical sensors with a potentiostat circuit so that a current having a desired electric potential wave form or a potentiostatic current can be received by said one or more chemical sensors from said potentiostat circuit in cooperation with said DAC and said control computer program executed in said computer, and thus a voltammetry or an amperometry under potentiostatic condition can be carried out.

10. The system according to claim 7, in which said one or more chemical sensors are the chemical sensor used in conductometry, said computer is further provided with a Digital-to-Analog converter (DAC) which is connected to said one or more chemical sensors so that an alternating current can be received by said one or more chemical sensors from said DAC in cooperation with said control computer program executed in said computer, and thus a conductometry can be carried out.

**Fig. 1**

**Fig. 3**

**Fig. 4**

```
                    ┌─────────┐
                    │  Start  │
                    └────┬────┘
                         │            ◄──────────────┐
                    ┌────▼─────────┐                 │
                    │   N=38400    │                 │
                    └────┬─────────┘                 │
                         │                           │
                      ┌──▼──┐                        │
                     ╱ For I=1╲                      │
                    ╱          ╲                     │
                    ╲  to  N   ╱                     │
                     ╲────┬───╱                      │
                         │        ◄─────────┐        │
                    ┌────▼─────────┐        ┊        │
                    │ Start PCL-714│        ┊        │
                    └────┬─────────┘        ┊        │
                         │                  ┊        │
                    ┌────▼─────────┐        ┊        │
                    │  Measure pH  │        ┊        │
                    └────┬─────────┘        ┊        │
                         │                  ┊        │
                        ┌▼┐ ┄┄┄┄┄┄┄┄┄┄┄┄┄┄┄┘        │
                        │I│                          │
                        └┬┘                          │
                         │                           │
                    ┌────▼──────────────┐            │
                    │ Calculate average │            │
                    │        pH         │            │
                    └────┬──────────────┘            │
                         │                           │
                     ╱───▼──────────╲       No       │
                    ⟨ pH stable or not?⟩─────────────┘
                     ╲──────┬────────╱
                         Yes│
                    ┌───────▼─────────┐
                    │ Store average pH│
                    └───────┬─────────┘
                            │
                       ┌────▼────┐
                       │   End   │
                       └─────────┘
```

Fig. 2

4.6286    4.6288    4.6298    4.6292    4.6294    4.6296

pH

# Fig. 5

Fig. 6

EP 0 800 079 A1

| | European Patent Office | EUROPEAN SEARCH REPORT | Application Number EP 96 10 5476 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US-A-5 268 852 (FORSYTHE TIMOTHY J ET AL) 7 December 1993 * column 2, line 4 - column 3, line 50; figure 1 * --- | 1,2,7,8 | G01N27/26 |
| X | US-A-5 128 015 (SZUMINSKY NEIL J ET AL) 7 July 1992 * column 8, line 64 - column 9, line 13; figure 9 * | 1,4,7,9 | |
| Y | | 6,10 | |
| Y | US-A-4 547 735 (KIESEWETTER HOLGER ET AL) 15 October 1985 * column 6, line 17 - line 34; figure 5 * ----- | 6,10 | |
| | | | TECHNICAL FIELDS SEARCHED (Int.Cl.6) G01N |

The present search report has been drawn up for all claims

| Place of search | Date of completion of the search | Examiner |
|---|---|---|
| THE HAGUE | 4 September 1996 | Krametz, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..............................................................................

& : member of the same patent family, corresponding document

EPO FORM 1503 03.82 (P04C01)